Europäisches Patentamt

European Patent Office

Office européen des brevets

(19)

(11) EP 1 686 493 A2

(12) EUROPEAN PATENT APPLICATION

(43) Date of publication:
02.08.2006 Bulletin 2006/31

(51) Int Cl.:
*G06F 17/27* (2006.01)    *G06F 17/22* (2006.01)

(21) Application number: 06001331.5

(22) Date of filing: 23.01.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 31.01.2005 CN 200510006708

(71) Applicant: NEC (China) Co., Ltd.
Suite 1201, Tower E3
Oriental Plaza No. 1
East Chang An Ave.
Dong Cheng District
Beijing 100738 (CN)

(72) Inventors:
• Xu, Liqin
  11 F. Bldg. A, Innovation Plaza
  Beijing 100084 (CN)
• Hsueh, Min-Yu
  11F. Bldg. A, Innovation Plaza
  Beijing 100084 (CN)

(74) Representative: Vossius & Partner
Siebertstrasse 4
81675 München (DE)

(54) **Dictionary learning method and device using the same, input method and user terminal device using the same**

(57)    This invention provides a dictionary learning method, said method comprising the steps of: learning a lexicon and a Statistical Language Model from an untagged corpus; integrating the lexicon, the Statistical Language Mode and subsidiary word encoding information into a small size dictionary. And this invention also provides an input method on a user terminal device using the dictionary with Part-of-Speech information and a Part-of-Speech Bi-gram Model added, and a user terminal device using the same. Therefore, sentence level prediction and word level prediction can be given by the user terminal device and the input is speeded up by using the dictionary which is searched by a Patricia Tree index of a dictionary index.

Fig. 3

EP 1 686 493 A2

**Description**

This invention relates to a natural language process, and more particularly, to a dictionary learning method and a device using the same, and to an input method for processing a user input and a user terminal device using the same.

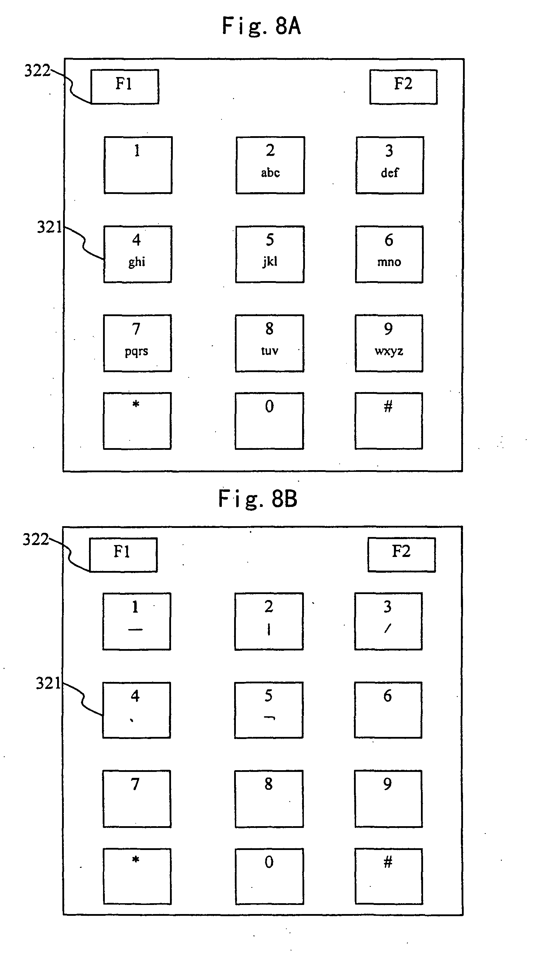

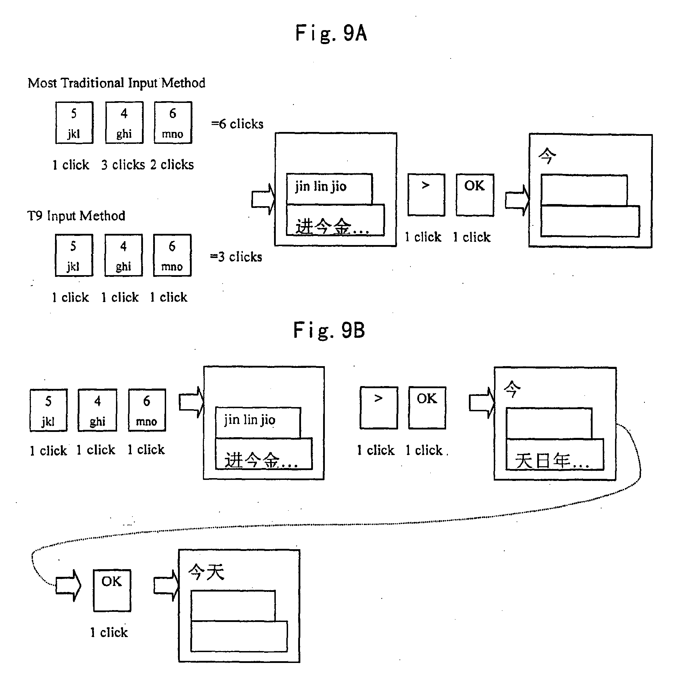

With the wide deployment of the computers, PDAs and mobile phones in China, it is an important feature in these machines to enable a user to input Chinese. In the current mobile terminal market of China, Input Method (IM) is provided almost in every mobile phone by using a digit keyboard. T9 and iTap are the most widely used input methods at present. In this kind of method, a user can input Pinyin or Stroke for a Chinese character in a 10-button keyboard. Figs. 8A-8B show the example keyboards for Pinyin and Stroke input. The input method can give predictive character according to the sequence of buttons a user taps. Typically for pinyin input, each button stands for 3~4 letters in the alphabet just as Fig. 8A shows. When a user inputs the pinyin for a character, the user needs not to click on a button 3~4 times to input each right letter that is required by the most traditional input method. The user just clicks the sequence of buttons according to the pinyin of this character, and then IM will predict the right Pinyin and right character in a candidate list. For example, a user wants to input "今" with Pinyin "jin", he needs not to input "j" with tapping "5" (stands for "jkl") 1 time, tapping "4" (stands for "ghi") 3 times and tapping "6" (stands for "mno") 2 times, whereas he just taps "546" then the IM will give predictive Pinyin "jin" and corresponding predictive character candidates "进今金 ...". The input sequence of T9 on inputting a Chinese character "今" with the most traditional input method is shown as Fig. 9A.

For current mobile terminals, a user must input Chinese character by character. Although some input method said they could give predictive result according to a user's input, they actually give prediction character by character. For each character, the user needs to make several clicks on button and make at least one visual verification. Hereby we are trying to invent a method which can give sentence level and word level predictive result and a device using the same.

As described above, T9 and iTap are the most widely used input methods on mobile terminals at present. However, the speed of these methods cannot satisfy most users. Many clicks and, more important, many interactions are needed to input even a single character.

The primary reason for those problems is that most current digital keyboard applied in input methods of Chinese are just character-based (US Patent 20030027601). It is because that in Chinese, there are no explicit boundaries between words and no clear definition of a word. Thus those input methods choose to treat a single character as a "word" corresponding to their English versions. However, this inevitably results in the huge number of redundant characters according to the digital sequence of a single character, which significantly lower the speed. Moreover, the character-based input methods limit the effect of word prediction to a great extent, since prediction can only be achieved according to a single character. That means that the current input method in mobile handsets can only transfer a digital sequence of user input into a list of character candidates. Then user must select the correct character from the candidate list. The user can not continuously input a word or sentence.

For example, a user wants to input a word "今天". Firstly, the user inputs "546" in a digital key board which means the pinyin "jin" for the character "今". A candidate list "进今金 ... " is displayed to the user then. Secondly the user must select the correct character "今" from the list. Thirdly a candidate list "天日年 ..." which can follow up the character "今" is displayed to the user. The user must select the correct character "天" from the list. The input sequence of T9 on inputting a Chinese word "今天" is shown as Fig. 9B.

In PC platform, there are many advanced quick input methods based on PC key-board such as Microsoft Pinyin, Ziguang Pinyin (紫光拼音) and Zhineng Kuangpin (智能狂拼) etc. Some of them can give sentence level prediction and all of them can give word level prediction. But for those which can give sentence level prediction, the dictionary size is very large, for example, Microsoft Pinyin needs 20 ~ 70 MB, Zhineng KuangPin needs up to 100MB. They all adopt a Statistical Language Model (SLM) technology to form a word based SLM (typically Word Bi-gram model or Word Tri-gram model) which can give predictive sentence. Whereas this kind of SLM uses a predefined lexicon and stores a large number of Word Bi-gram or Word Tri-gram entries in a dictionary, the size of the dictionary will be inevitably too large to be deployed on a mobile terminal. And the prediction speed will be very slow in mobile terminal platform.

Another disadvantage is that almost all of the input methods do not have a lexicon or just have a predefined lexicon. Therefore some important words and phrases frequently used in a language can not be input continuously. E.g.

"今天下午".

Therefore, the present invention has been made in view of the above problems, and it is an object of this invention to provide a method of dictionary learning and a device using the dictionary learning method. Moreover, this invention also provides an input method and a user terminal device using the input method. The device learns a dictionary from corpora. The learned dictionary comprises a refined lexicon which comprises many important words and phrases learned from a corpus. While the dictionary is being applied in an input method described later, it further contains Part-of-Speech information and Part-of-Speech Bi-gram Model. The user terminal device uses a Patricia tree (a kind of treelike data structure) index to search the dictionary. It receives a user input and gives sentence and word prediction based on the dictionary searching results, said word prediction comprising current word candidate list and predictive word candidate list. All this results are displayed to a user. That means a user can input a word or sentence by continuously inputting the digital sequence corresponding to this word or sentence. The user does not need to input digital sequence for every character and choose correct character from the candidate list. Thus the input speed will be greatly improved.

According to the first aspect of this invention, there is provided a dictionary learning method, comprising the steps of: learning a lexicon and a Statistical Language Model from an untagged corpus; integrating the lexicon, the Statistical Language Model and subsidiary word encoding information into a dictionary.

According to the second aspect of this invention, said method further comprising the steps of: obtaining Part-of-Speech information for each word in the lexicon and a Part-of-Speech Bi-gram Model from a Part-of-Speech tagged corpus; and adding the Part-of-Speech information and the Part-of-Speech Bi-gram Model into the dictionary.

According to the third aspect of this invention, there is provided a dictionary learning device, comprising: a dictionary learning processing module which learns a dictionary; a memory unit which stores an untagged corpus; a controlling unit which controls each part of the device; wherein the dictionary learning processing module comprises a lexicon and Statistical Language Model learning unit which learns a lexicon and a Statistical Language Model from the untagged corpus; and a dictionary integrating unit which integrates the lexicon, the Statistical Language Model and subsidiary word encoding information into a dictionary.

According to the forth aspect of this invention, the memory unit of the dictionary learning device further comprises a Part-of-Speech tagged corpus, and the dictionary learning processing module further comprises a Part-of-Speech learning unit which obtains Part-of-Speech information for each word in the lexicon and a Part-of-Speech Bi-gram Model from the Part-of-Speech tagged corpus; and the dictionary integrating unit which adds the Part-of-Speech information and Part-of-Speech Bi-gram Model into the dictionary.

According to the fifth aspect of this invention, there is provided an input method for processing a user input, wherein the method comprises: a receiving step for receiving a user input; an interpreting step for interpreting the user input into encoding information or a user action, wherein the encoding information for each word in a dictionary is obtained in advance on the basis of the dictionary; a user input prediction and adjustment step for giving sentence and word prediction using Patricia Tree index in a dictionary index based on an Statistical Language Model and Part-of-Speech Bi-gram Model in the dictionary and adjusting the sentence and word prediction according to the user action, when the encoding information or the user action is received; a displaying step for displaying the result of sentence and word prediction.

According to the sixth aspect of this invention, there is provided a user terminal device for processing a user input, wherein the device comprises: a user input terminal which receives a user input; a memory unit which stores a dictionary and a dictionary index comprising a Patricia Tree index; an input processing unit which gives sentence and word prediction based on the user input; and a display which displays the result of sentence and word prediction; wherein the input processing unit comprises an input encoding interpreter which interprets the user input into encoding information or a user action, wherein the encoding information for each word in the dictionary is obtained in advance on the basis of the dictionary; a user input prediction and adjustment module which gives sentence and word prediction using Patricia Tree index in a dictionary index based on Statistical Language Model and Part-of-Speech Bi-gram Model in the dictionary and adjusting the sentence and word prediction according to the user action, when the encoding information or the user action is received.

According to this invention, it can give sentence level prediction and word level prediction by using a learned dictionary with small size. The dictionary is learned by the dictionary learning device of the forth aspect of this invention. The dictionary learning device extracts a lot of important information from corpus and maintains them with special contents and structure which can be stored in a small size. Unlike conventional input method on mobile handsets, the basic input unit of this invention is "word". Herein "word" also includes "phrase" learned from corpus. Based on the contents and the structure of this dictionary, the input method can give sentence level and word level prediction. Therefore, compared with conventional input method such as T9 and iTap, the input speed is increased.

Compared with PC based input method, such as Microsoft Pinyin, which can also give sentence and word prediction but uses a large dictionary to store a predefined lexicon and corresponding large number of Word Bi-gram entries or Word Tri-gram entries, this invention learns a dictionary which only stores the extracted important language information in an optimized lexicon and corresponding Word Uni-gram. Therefore, all the information in the dictionary is essential information for the language process and needs much less storage cost. The advantages of this invention are described in details as following:

1. A dictionary which comprises a refined lexicon can be learned.
This refined lexicon contains many important words and phrases learned from a corpus.

2.The learned dictionary contains a refined lexicon and some Part-of-Speech information. This dictionary which can help to give sentence and word prediction is small enough to be deployed on a mobile handset.

3.The dictionary is indexed by using Patricia Tree index. It helps retrieve words quickly. Therefore sentence and word prediction can be achieved easily and fast. Because of the advantages described above, it can speed up the input.

The above and other features and advantages of the present invention will become more apparent to those skilled in the art by the following detailed preferred embodiments thereof with reference to the attached drawings, in which:

Fig. 1 shows a schematic diagram illustrating the relationship between a dictionary learning device and a user terminal device according to the present invention;
Fig. 2A shows an example of the schematic structure of the dictionary learned by the dictionary learning device;
Fig. 2B shows another example of the schematic structure of the dictionary learned by the dictionary learning device;
Fig. 3 shows a block diagram of a dictionary learning device according to the present invention;
Fig. 4A shows a detailing block diagram of an example of dictionary learning processing module of a dictionary learning device;
Fig. 4B shows a detailing block diagram of another example of dictionary learning processing module of a dictionary learning device;
Fig. 5 is a flowchart for explaining a process of learning a dictionary and a Statistical Language Model implemented by a lexicon and Statistical Language Model learning unit of the dictionary learning processing module according to the present invention;
Fig. 6 is a flowchart of lexicon refining according to the present invention;
Fig. 7 shows a block diagram of a user terminal device according to the first embodiment of the present invention;
Figs. 8A-8D shows four schematic blocks of traditional keyboards of a user terminal device;

Fig. 9A shows the input sequence of T9 on inputting a Chinese character "今" using the most traditional input method;
Fig. 9B shows the input sequence of T9 on inputting a Chinese word "今天" using the most traditional input method;
Fig. 10 shows a block diagram of connection relationship among different sections of an input processing unit in the user terminal device of the present invention;
Fig. 11 shows an example of a user interface of the display of the user terminal device of the present invention.
Fig. 12 shows a flowchart of building a Patricia Tree index implemented by a dictionary indexing module of the user terminal device of the present invention;
Fig. 13 shows an example of sorting result and Patricia Tree index of the present invention;
Fig. 14 shows a flowchart of user input prediction and adjustment process which is implemented by the user input prediction and adjustment module of the user terminal device of the present invention;
Fig. 15 shows an example input sequence of the user terminal device;
Fig. 16 shows a block diagram of a user terminal device according to the second embodiment of the present invention.

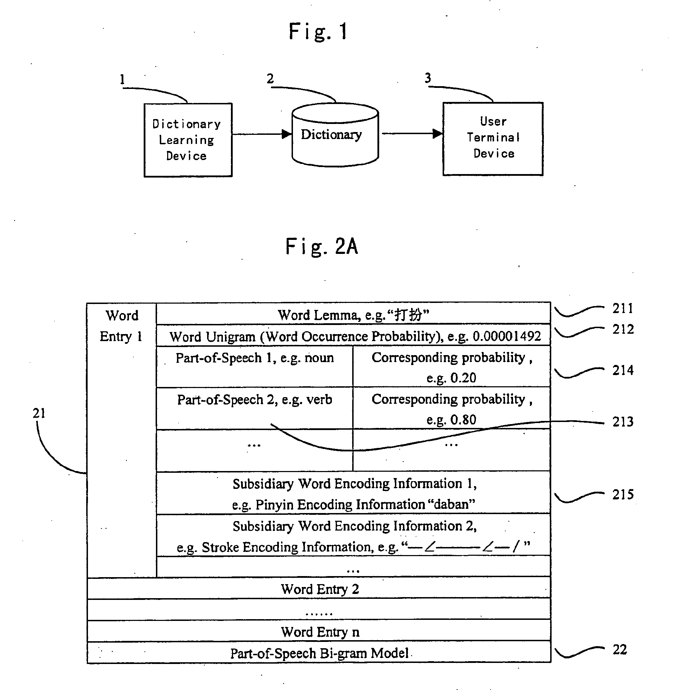

A schematic block diagram illustrating the relationship between a dictionary learning device and a user terminal device of the present invention will be described with reference to Fig. 1. A dictionary learning device 1 learns a computer readable dictionary 2. A user terminal device 3 uses the dictionary to help user input text. The dictionary learning device 1 and user terminal device 3 are independent in some sense. The dictionary 2 trained from the dictionary learning device 1 can also be used in other application. The dictionary learning device 1 uses special dictionary learning method and special dictionary structure to build a small size dictionary which can provide a user with fast input.

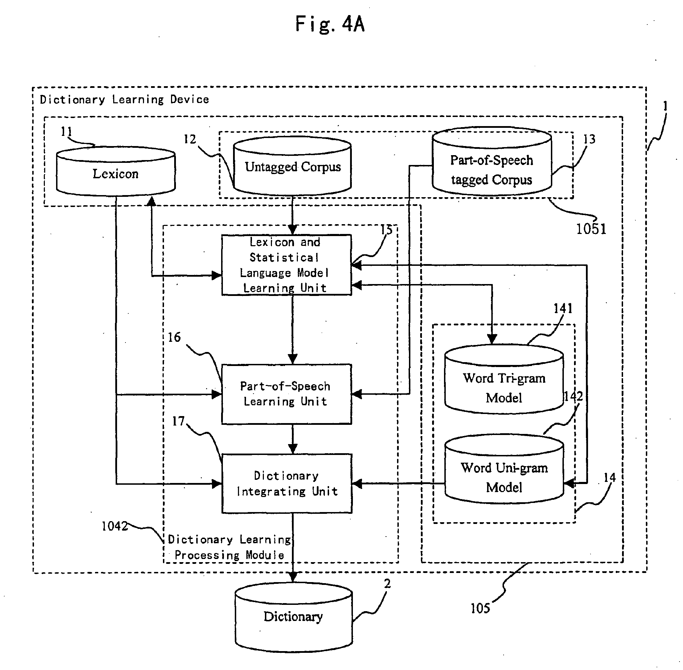

Fig. 2A shows an example of the schematic structure of the dictionary learned by the dictionary learning device 1. In this Example, Part 2 includes many Word Entries (Part 21). Said Word Entry is not only for a "word" (e.g. "打扮") but also a "phrase" (e.g. "打扮整齐", "打扮整齐干净"). Said "phrase" is actually a compound (consist of a sequence of words). In order to avoid inconvenience in the following description, the term "word" refers to both conventional "word" and conventional "phrase". Some other word examples include "今天", "今天下午", "今天下午八点". Part 21 includes a Word Lemma (Part 211), a Word Unigram (Part 212), several Part-of-Speech of this word (Part 213) and the Corresponding probabilities for these Part-of-Speech (Part 214), some Subsidiary word encoding information (Part 215). Part 215 may be Pinyin (Pronunciation for Chinese) encoding information or Stroke encoding information or other word encoding information. What kind of Part 215 is to be added into Part 21 depends on the application. In some examples illustrated later, the part 21 may not include the Part 215. Finally, Part 22, a Part-of-Speech Bi-gram Model, is included in this example. This also depends on the application and may not be included in other examples. As it is obvious for those skilled in the art, the dictionary 2 is not limited to Chinese, it can be any other kind of non-Chinese dictionary. For Japanese, all the parts of the dictionary are the same as Chinese except that the Subsidiary Word Encoding Information (Part 215) should be Hiragana encoding information instead of pinyin encoding information. For example, for word "今晩", the Hiragana encoding information is "こ んばん". For English, all the parts are the same as Chinese except that the Subsidiary Word Encoding Information (Part 215) should be omitted because the English word encoding information is just the character sequences of this word. For Korean, all the parts are the same as Chinese except that the Subsidiary Word Encoding Information (Part 215) should be Korean Stroke encoding information instead of pinyin encoding information. For example, for word "휴대폰", the Korean Stroke encoding information is "ㅎ —.. ㅣ.ㅣ ㅍ .—ㄴ". This dictionary is learned by the example device shown in Fig 4A that will be described later.

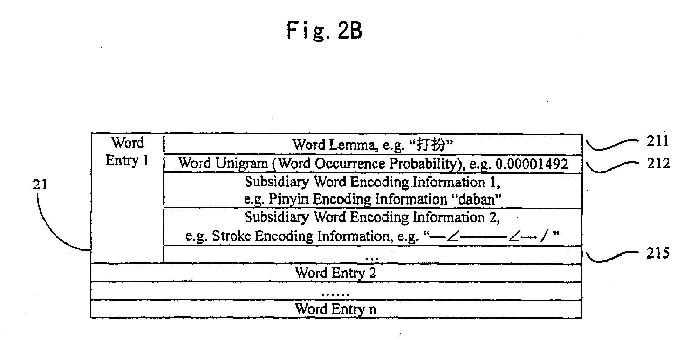

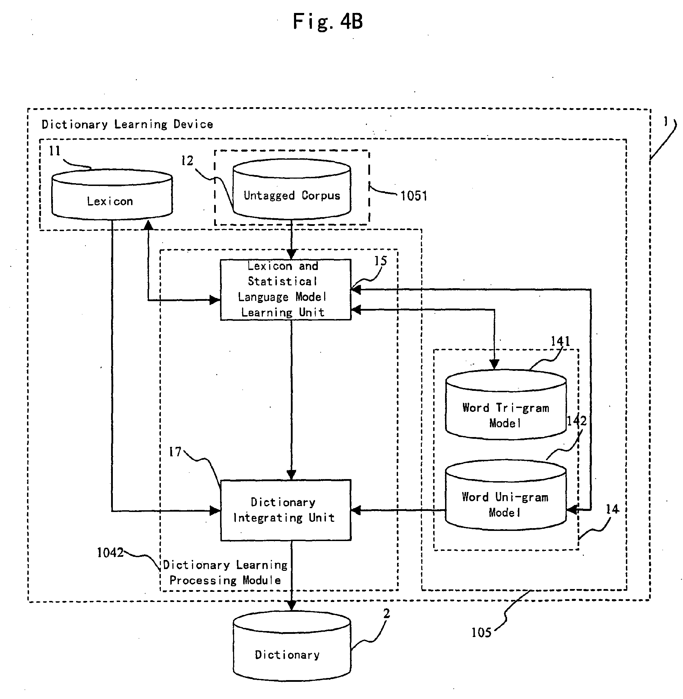

Fig. 2B shows another example of the schematic structure of the dictionary learned by the dictionary learning device 1. Compared with the example shown in Fig 2A, Part-of-Speech of this word (Part 213), the Corresponding probabilities for these Part-of-Speech (Part 214) and Part-of-Speech Bi-gram Model (part 22) are omitted in this example. This dictionary can be used more widely than the first example. It can be used in handwriting and voice recognition post-processing, input method and many other language related application. This dictionary is learned by the example device shown in Fig 4B which will be described later.

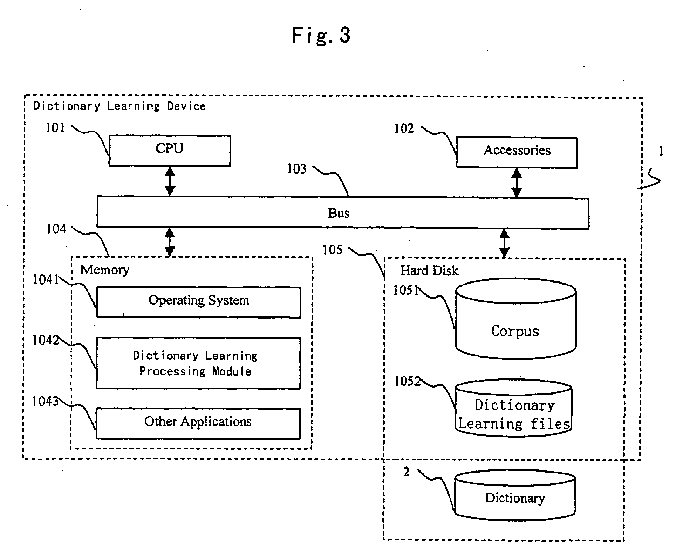

Now a dictionary learning device 1 which learns a dictionary will be described with reference to Fig 3 and Fig 4A. As shown in Fig. 3 and Fig. 4A, Dictionary Learning Device 1 comprises a CPU 101, accessories 102, a memory 104 and a hard disk 105 which are connected by an internal bus 103. The memory 104 stores an operation system 1041, a dictionary learning processing module 1042 and other applications 1043. The hard disk 105 stores a corpus 1051, dictionary learning files 1052 and other files (not shown). The dictionary 2 learned by this device is also stored on the hard disk 105. The corpus 1051 comprises, for example, an untagged corpus 12 and a Part-of-Speech tagged corpus 13. The dictionary learning files 1052 comprises a lexicon 11 and a Statistical Language Model 14. The dictionary learning processing module 1042 comprises a lexicon and Statistical Language Model learning unit 15, a Part-of-Speech learning unit 16 and a dictionary integrating unit 17.

A final. Dictionary 2 is to be trained by the Dictionary Learning Processing module 1042. The dictionary Learning processing module 1042 reads the corpus 1051 and writes the lexicon 11 and the Statistical Language Model 14 on the hard disk 105 and finally outputs the dictionary 2 on the hard disk 105.

The lexicon 11 consists of a collection of word lemmas. Initially, a common Lexicon consisting normal conventional "word" in the language can be used as lexicon 11. The lexicon and Statistical Language Model learning part 15 will learn a final lexicon and a Statistical Language Model, and the lexicon 11 will be refined during this process. Some unimportant words are deleted and some important words and phrases are added from/to the lexicon 11. The untagged corpus 12 is a corpus with a large number of texts which is not segmented into word sequence but comprises many sentences (For English, a sentence can be separated into "word" sequence by some "token" such as space. But these words in the word sequence are only conventional "words" but not include conventional "phrases" which are also called "word" in this description). The lexicon and Statistical Language Model learning unit 15 processes the lexicon 11 and the untagged corpus 12, and then a Statistical Language Model 14 (initially does not exist) is created. The Statistical Language Model 14 comprises a word Tri-gram Model 141 and a word Uni-gram Model 142. Then the lexicon and Statistical Language Model learning unit 15 uses information in the Statistical Language Model 14 to refine the lexicon 11. The lexicon and Statistical Language Model learning unit 15 repeats this process and creates a final lexicon 11 and a final word Uni-gram Model 142.

Part-of-Speech tagged corpus 13 is a corpus with a sequence of words which are tagged by the corresponding Part-of-Speech. Typically, it is built manually, thus the size is limited. The Part-of-Speech learning unit 16 scans the word sequence in Part-of-Speech tagged corpus 13. Based on The lexicon 11, Part-of-Speech 16 makes statistics on Part-of-Speech information for each word in Lexicon. All the Part-of-Speech of a word (Part 213 in the Dictionary 2) and their corresponding probabilities (Part 214 in the Dictionary 2) are counted. For the word in the Lexicon 11 which is not occurred in the word sequence, manually give it a Part-of-Speech and a corresponding probability of 1. Part-of-Speech Bi-gram Model (Part22 in the Dictionary 2) is also given in this process using a common Bi-gram Model computation method.

By using the Word Uni-gram model 142, the lexicon 11 and some information given by Part-of-Speech Learning Unit 16, the dictionary integrating unit 17 integrates all the data above and adds some application-needed Subsidiary Word Encoding Information (Part 215 in Dictionary 2) such that a final Dictionary 2 described in Fig 2A is created.

Another example of dictionary learning device 1 which learns a dictionary will be described with reference to Fig 3 and Fig 4B. Compared with the example shown in Fig 3 and Fig 4A, the corpus 1051 only comprises an untagged corpus 12. The dictionary learning processing module 1042 does not include a Part-of-Speech learning unit 16. Therefore, Part-of-Speech related information is not considered in this example. The dictionary integrating unit 17 integrates Word Tri-gram Model 141, Word Uni-gram Model 142, the lexicon 11 and some application-needed Subsidiary Word Encoding Information (Part 215 in Dictionary 2) into a final Dictionary 2 as Fig 2B described.

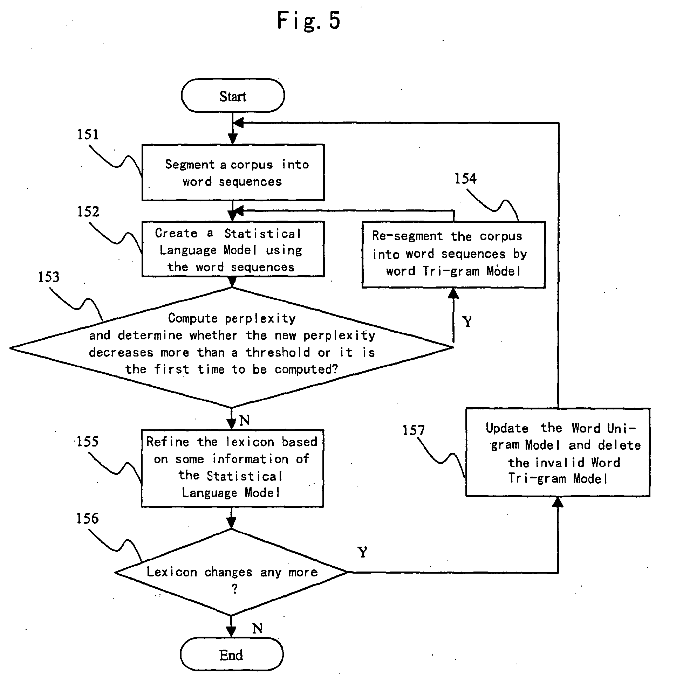

Fig. 5 is a flowchart explaining a process of learning a lexicon and a Statistical Language Model implemented by the lexicon and Statistical Language Model learning unit 15. First, the untagged corpus 12 is segmented into word sequence at step 151. There are some different methods for this segmentation step. The first example is to segment the corpus 12 simply by using maximal matching based on the Lexicon. The second example is: to segment the corpus 12 by using maximal likelihood based on Word Uni-gram Model 142 in case the Word Uni-gram model 142 is existing; to segment the corpus 12 using maximal matching by the Lexicon in case the Word Uni-gram model 142 is not existing. Maximal likelihood is a standard segmenting measure showed in equation (1):

$$\hat{S}\left\{w_1 w_2 \cdots w_{n_{\hat{s}}}\right\} = \arg\max_s P\left(S\left\{w_1 w_2 \cdots w_{n_s}\right\}\right)$$

$$(1)$$

In equation (1), $S\{w_1 w_2 ... w_{n_s}\}$ denotes the word sequence $w_1 w_2 ... w_{n_s}$, $P(S\{w_1 w_2 ... w_{n_s}\})$ denotes the probability of this word sequence's likelihood. The optimized word sequence will be $\hat{S}\{w_1 w_2 ... w_{n_{\hat{s}}}\}$.

At step 152, the segmented word sequence is received and the Statistical Language Model 14 including Word Tri-gram Model 141 and Word Uni-gram Model 142 is created based on the word sequence with conventional SLM creating method.

At step 153, the Word Tri-gram Model created in Step 152 is used to evaluate the perplexity of the word sequence created in Step 151. If this is the first time to compute the perplexity, then the process goes to step 154 directly. Otherwise the new obtained perplexity is compared to the old one. If the perplexity decreased more than a pre-defined threshold, the process goes to step 154; otherwise the process goes to step 155.

At step 154, the corpus 12 is re-segmented into word sequence using maximal likelihood by the newly created Word Tri-gram Model 141 and the step 152 is performed.

At step 155, some new words are added to the Lexicon and some unimportant words in the Lexicon are removed from the Lexicon on the basis of some information in the Statistical Language Model. So the lexicon is refined. How to do lexicon refining will be described in the following paragraph. A new word is typically a word comprising a word sequence which is a Tri-gram entry or a Bi-gram entry in Word Tri-gram Model 141. An example: if "今天", "下午" and "八点" are all words in the current Lexicon, then an Bi-gram entry "今天 下午" or an Tri-gram entry "今天 下午 八点" is possible to be the new word in the refined Lexicon. If they are both added, then the refined Lexicon should include both word "今天下午" and "今天下午八点".

At step 156, the Lexicon is evaluated. If the lexicon is not changed at Step 155 (no new word is added and no unimportant word is deleted), the lexicon and Statistical Language Model learning unit 15 stops the process. Otherwise the process goes to step 157.

At Step 157, the Word Tri-gram Model 141 and Word Uni-gram Model 142 are not valid at this time because they are not corresponding to the newly created Lexicon. Here Word Uni-gram Model is updated according to the new Lexicon. Word Uni-gram occurrence probability of the new word is got from the Word Tri-gram Model. And the word Uni-gram entry to be deleted is deleted. Finally the Word Tri-gram Model 141 is deleted and the step 151 is repeated.

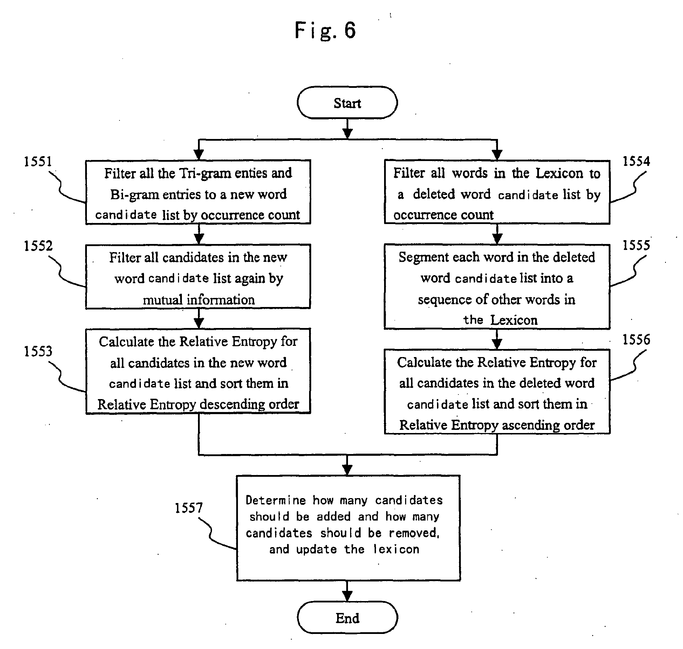

Fig. 6 shows a flowchart of lexicon refining according to the present invention. When Lexicon Refining starts, there are two paths to go. One is to go to Step 1551, the other is to go to Step 1554. Any path can be chosen to go first.

First, all the Tri-gram entries (e.g. "今天 下午 八点") and Bi-gram entries (e.g. "今天 下午") are filtered by an occurrence count threshold at Step 1551, for example, all entries which occurred more than 100 times in the corpus are selected into the new word candidate list. Thus a new word candidate list is created. At step 1552, all word candidates are filtered by a mutual information threshold. Mutual information is defined as:

$$MI(w_1, w_2 \cdots w_n) = \frac{f(w_1, w_2 \cdots w_n)}{\sum_{i=1}^{n} f(w_i) - f(w_1, w_2 \cdots w_n)} \qquad (2)$$

where $f(w_1, w_2 \ldots w_n)$ denotes the occurrence frequency of the word sequence $(w_1, w_2 \ldots w_n)$. Here $(w_1, w_2 \ldots w_n)$ is a new word candidate,

wherein n is 2 or 3. For example, for $w_1$ 今天, $w_2$ 下午 and $w_3$ 八点, the mutual information of candidate "今天 下午 八点" is

$$MI(今天下午八点) = \frac{f(今天下午八点)}{f(今天) + f(下午) + f(八点) - f(今天下午八点)}$$

All candidates whose mutual information is smaller than a threshold are removed from the candidate list.
At step 1553, Relative Entropy for each candidate in the new word candidate list is calculated. Relative entropy is defined as:

$$D(w_1, w_2, \cdots, w_n) = f(w_1, w_2, \cdots, w_n) \log \left[ \frac{P(w_1, w_2, \cdots, w_n)}{f(w_1, w_2, \cdots, w_n)} \right] \qquad (3)$$

where $P(w_1, w_2, \ldots, w_n)$ is the likelihood probability of the word sequence $(w_1, w_2 \ldots w_n)$ given by the current word Tri-gram Model. Then at step 1553, all candidates are sorted in a Relative Entropy descending order.
Before going to Step 1557, the right path (Step 1554~1556) must be processed first. The right path is to delete some unimportant words (e.g. "革命委员会") and some "fake words". When a word sequence is added as a new word, it may be a "fake word" (e.g. "今天下"). Therefore, some lexicon entries need to be deleted.
All the words in the Lexicon are filtered by an occurrence count threshold at Step 1554, for example, all words which occurred smaller than 100 times in the lexicon are selected into the deleted word candidate list. A deleted word candidate list is created then.
At step 1555, each word in the deleted word candidate list is segmented into a sequence of other words. For example, "革命委员会" is segmented into "革命", "委员会". The segmentation method is similar to the method described at step 152 or step 154. Any method in these two steps can be used.
Similar to step 1553, Relative Entropy for each candidate is computed at step 1556. Then all candidates are sorted in a Relative Entropy ascending order.
At step 1557, a strategy is adopted to determine how many new word candidates (which are in the new word candidate list) should be added and how many deleted word candidates (which are in the deleted word candidate list) should be removed on the basis of the two word candidate list: one for new words, the other for deleted words. This strategy can be a rule or a set of rules, for example, use a threshold for the Relative entropy, or use a total number of words in Lexicon as a measure, or use both these two rules. Finally the lexicon is updated.

It is very important to do the lexicon refining. In this lexicon refining process, some important phrases which originally are just some word sequences are add to the lexicon as new words, therefore, some important language information that does not exist in the original Word Uni-gram Model can be extracted to the final Word Uni-gram Model. Also some unimportant language information is deleted from the original Word Uni-gram Model. Therefore the final word Uni-gram model can maintain a small size but has much better performance in language prediction.

Accordingly, a dictionary with small size can be obtained and this invention can use a small size dictionary to give good performance in word and sentence prediction.

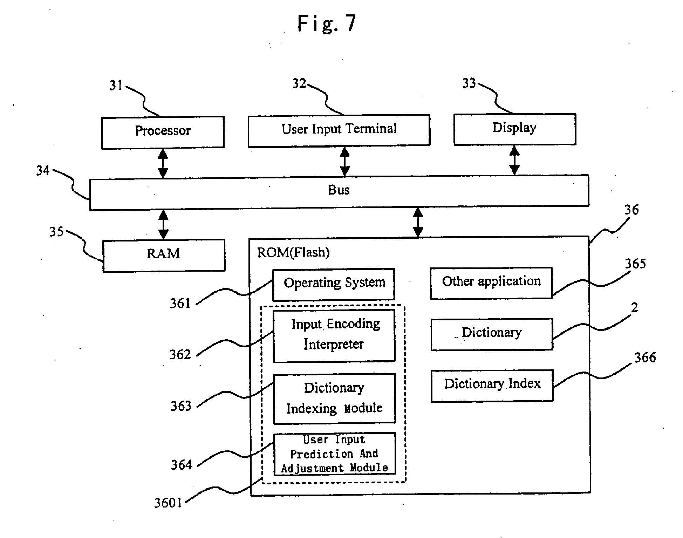

Fig. 7 shows a block diagram of a user terminal device according to the first embodiment of the present invention. As show in Fig. 7, a processor 31, a user input terminal 32, a display 33, a RAM 35 and a ROM (Flash) 36 are connected by a bus 34 and are interacted. An input encoding interpreter 362, a dictionary indexing module 363, a user input prediction and adjustment module 364 are comprised of an input processing unit 3601. The input processing unit 3601, a dictionary 2, a dictionary index 366, an operating system 361 and other applications 365 are resided in the ROM 3 6.

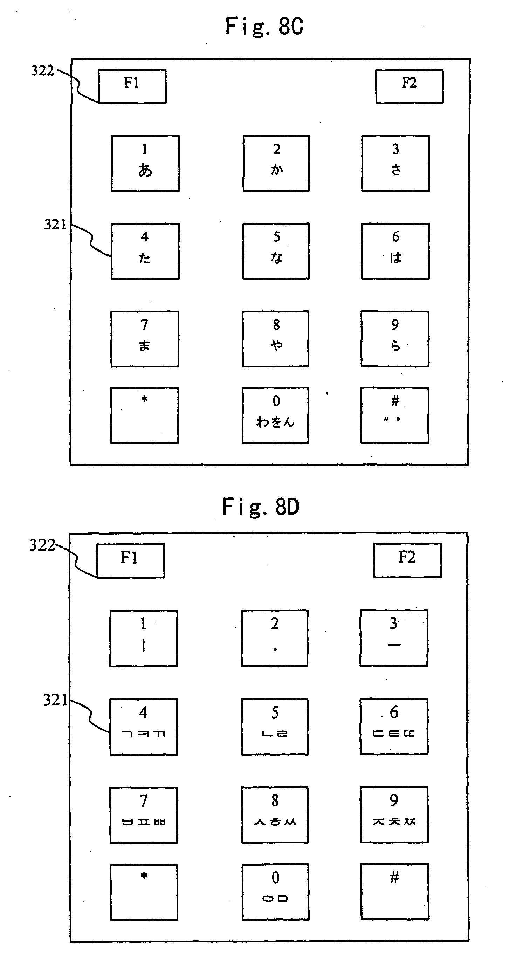

Fig. s 8A)-8D) shows four schematic blocks of traditional key boards of a user terminal device, which are used by the present invention. A user input terminal 32 could be any type of user input device. One example of the user input terminal 32 is a digital key board in which each digital button stands for several pinyin codes, as shown in Fig. 8A). Button 321 is a digit "4" which stands for pinyin character "g" or "h" or "i". Button 322 is a "function" button, a user can use this kind of button to make some actions. For example, click this button several times to select a correct candidate from a candidate list. This example of the user input terminal can also be used in English input. Therefore each digital button stands for several alphabet characters. Another example of the user input terminal 32 is a digital key board in which each digital button stands for several stroke codes, as shown in Fig. 8B). In figure 8B, Button 321 is a digit "4" which stands for stroke ", ". The third example of the user input terminal 32 is a digital key board used in Japanese input method. Each digital button in this example stands for several Hiragana. In figure 8C, Button 321 is a digit "4" which

stands for Hiragana "た" or "ち" or "つ" or "て" or "と". The fourth example of the user input terminal 32 is a digital key board used in Korean input method. Each digital button in this example stands for several Korean Stroke. In figure 8D, Button 321 is a digit "4" which stands for Korean "ㄱ" or "ㅋ" or "ⵏ". The fifth example of the user input terminal 32 is a touch pad in which a pen trace can be recorded. Some user actions can also be recorded by some kind of pen touching on screen.

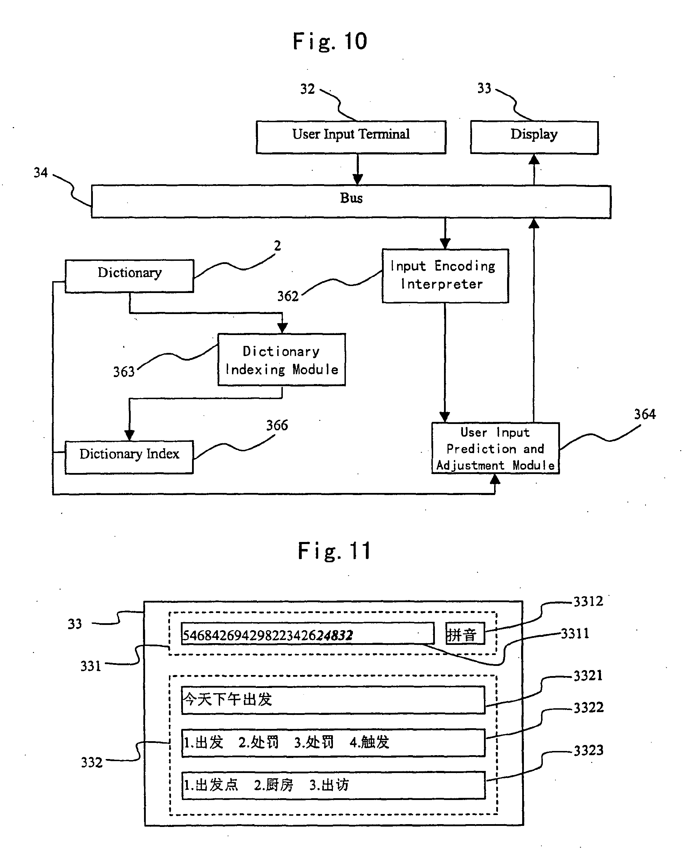

Fig. 10 shows a block diagram of connection among different sections of the input processing unit in the user terminal device shown in Fig. 7. Before the user input prediction and adjustment module 364 works, the dictionary indexing module 363 reads the dictionary 2 and adds the dictionary index 366 to ROM 36. The dictionary index 366 is an index for all word entries in dictionary 2 based on the corresponding words encoding information. For the first example of the user input terminal 32, the encoding information for a word is a digital sequence. For example, Pinyin for word

"今天" is "jintian", so the encoding information is "5468426". For the second example of the user input terminal 32, the encoding information for a word is a digital sequence. For example, Stroke for word "今天" is "丿、一一丿、", so the encoding information is "34451134". For the third example of the user input terminal 32, the encoding information for a word is a digital sequence. For example, Hiragana for word "今晚" is "こんばん", so the encoding information is "205#0". For the fourth example of the user input terminal 32, the encoding information for a word is a digital sequence. For example, Korean Strokes for word "휴 대 폰" is "ㅎ—ⵏ ㅣ.ㅣ ㅍ .—ㄴ", so the encoding information is "832261217235". For the fifth example of the user input terminal 32, the encoding information for a word is a Unicode sequence. For example, Unicode for word "今天" is "(4ECA) (5929)", so the encoding information is "(4ECA) (5929)".

The user input terminal 32 receives a user input and sends it to the input encoding interpreter 362 though bus 34. The input encoding interpreter 362 interprets the user input into encoding information or a user action and transfers it to the user input prediction and adjustment module 364. This encoding information can be a definite one or a stochastic one. For the first example of the user input terminal 32, the input encoding interpreter 362 interprets each button click to a definite digit code ("0" ~ "9") which stands for several possibilities of a single character of a Pinyin ("a"~"z"). For the second example of the user input terminal 32, the input encoding interpreter 362 interprets each button click to a definite digit code ("0" ~ "9") which stands for a character of a stroke ("—"~" ¬").

For the third example of the user input terminal 32, the input encoding interpreter 362 interprets each button click to a definite digit code ("0" ~ "9" and "#") which stands for several possibilities of a single Hiragana. For the fourth example of the user input terminal 32, the input encoding interpreter 362 interprets each button click to a definite digit code ("0" ~"9") which stands for several possibilities of a single Korean Stroke. For the fifth example of the user input terminal 32, Input encoding interpreter 362 interprets each pen trace to a stochastic variable which stands for several probable Unicode and corresponding probabilities. (This input encoding interpreter 362 can be a handwriting recognition engine, it recognizes pen trace as a set of character candidates and corresponding probabilities.)

The user input prediction and adjustment module 364 receives the interpreted encoding information or user action sent by input encoding interpreter 362. Based on dictionary 2 and dictionary index 366, the results for the user input are created and send it to a display 33 though bus 34. The display 33 is a device which displays the result of the input method and other information related to the input method to the user. Fig. 11 shows an example of the user interface of the display 33 of the user terminal device.

This example of the display comprises an input status information area 331 and an input result area 332. In the area 331, a digits sequence of the user input 3311 and an input method status 3312 are displayed. Area 3311 indicates the current digital sequence which is already input by the user. Area 3312 indicates the current input method is a digital key board input method for pinyin. In the area 332, some results which are given by user input prediction and adjustment module 364 are displayed. The sentence prediction 3321 is the sentence which is a prediction given by the user input prediction and adjustment module 364 according to the input digital sequence 3311. The current word candidates 3322 is a list for all current word candidates which is given by the user input prediction and adjustment module 364 according to the shadowed part (the current word part) of the input digital sequence 3311. All the candidates in this list have the same word encoding information, i.e., a digital sequence of "24832". The current predictive word candidates 3323 is a list for all predictive current word candidates which is given by the user input prediction and adjustment module 364 according to the shadowed part (the current word part) of the input digital sequence 3311. The first five digits of the word encoding information of all candidates in this list have the same digits sequence "24832". (出 发 点 "248323426", 厨 房 "2483234", 出访 "2483234"). The layout of the Display 33 can vary and every component can be removed or changed.

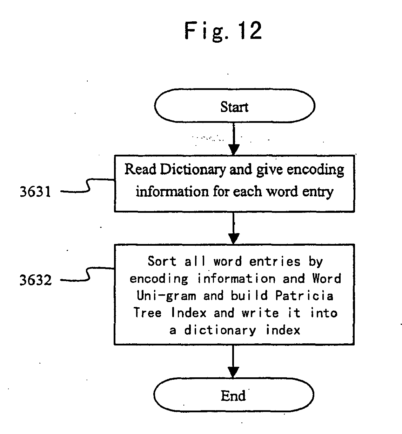

Fig. 12 shows a flowchart of building a Patricia Tree index implemented by the dictionary indexing module 363. At step 3631, the dictionary indexing module 363 reads the dictionary 2. According to the specific user input terminal 32, the encoding information for each word is given. Then, at step 3632, the word entries are sorted by their encoding information firstly. If two word entries' encoding information is identical, they are sorted by Word Uni-gram secondly. Based on the sorting result, a Patricia tree index for the dictionary is built. The Patricia tree index can store a large number of records and provide fast continuous searching for the records. Finally, The Patricia tree index is written to dictionary index.

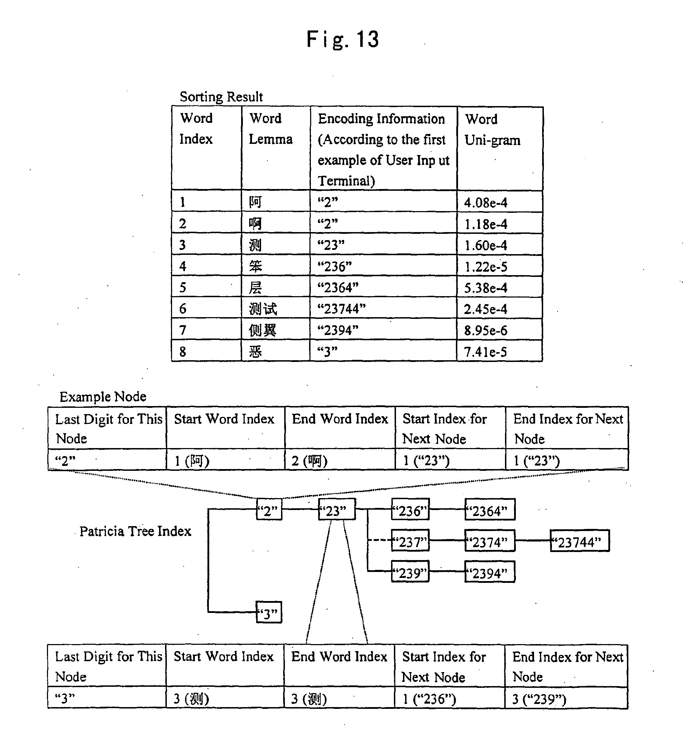

Fig. 13 shows an example of sorting result and Patricia tree index of the present invention. Using the dictionary index 366 which has the above Patricia tree index, the user input prediction and adjustment module 364 performs quick word searching when an additional user input action is received. For example, given "2" at first, the user input prediction and adjustment module 364 can search to node "2" in one step quickly and record this node in memory. At next step, when "3" is input, the user input prediction and adjustment module 364 searches from node "2" to "23" in just one step. In each node, the information for computing the corresponding word candidates and predictive candidates can be easily got.

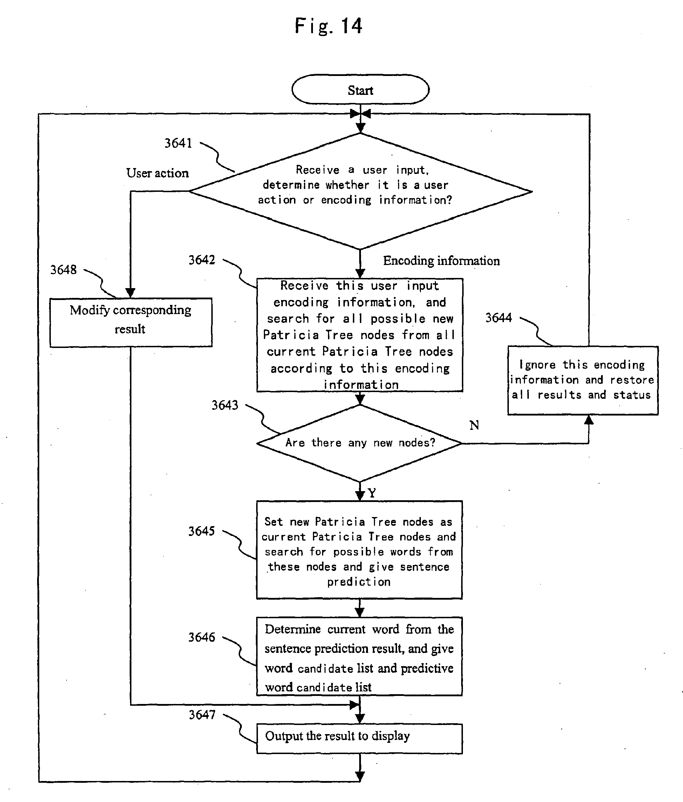

Fig. 14 shows a flowchart of user input prediction and adjustment process which is implemented by the user input prediction and adjustment module 364 of the user terminal device 1. At step 3641, the user input information is received from the input encoding interpreter 362 and the user input prediction and adjustment module 364 determines that whether the received input information is a user action or encoding information. If it is a user action, step 3648 will be carried out. Otherwise step 3642 will be carried out.

At the step 3642, this input encoding information is used and the process goes forward one step along the Patricia Tree index in the Dictionary index 366. That means, the user input prediction and adjustment module 364 stores a list of current Patricia tree nodes. When additional encoding information is added, by using the nodes in this list as a start point, the step 3642 goes forward one step along the Patricia tree index to search the new Patricia tree node(s). If the additional encoding information is the first encoding information added, then the step 3642 starts from the root of the Patricia tree. That is to say, for the example Patricia Tree in Figure 13, "2" is added as the first encoding information, the step 3642 searches the new node "2" in the Patricia tree from the root. The second time, "2" and the root node will be set as the current Patricia Tree nodes. If "3" is added as the second encoding information, at the step 3642, the new node "23" is searched from current node "2" and the new node "3" is searched from the root node of the current node. The third time, node "23", node "3" and the root node will be set as the current nodes.

At step 3643, if no new node is searched, the process goes to Step 3644. That means this encoding information is invalid. Otherwise the process goes to Step 3645.

At step 3644, this encoding information is ignored and all results and status are restored to their former values before this encoding information is added. Then the process returns to the step 3641 to wait for next user input information.

At step 3645, the new Patricia Tree nodes are received, and they are set as current Patricia tree nodes. Each current node represents a set of possible current words for all the input encoding information. Then a sentence prediction is done in this step to determine what the most probable word sequence is. The most probable word sequence is the final sentence prediction. For example, "2" and "3" are added as the first and second user input encoding information respectively. The current nodes are "23", "3" and the root node. Every word with encoding information "23" is a word sequence with only one word. This is a kind of possible sentence (测 is a probable sentence). Every word with encoding information "3" can follow the word with encoding information "2" and form a two word sequences "2"-"3". This is another kind of possible sentence ("阿 恶'" is a probable sentence, and "啊 恶" is also a probable sentence). How to determine the most probable sentence can be expressed as: given a word sequence of encoding *I*, find the most probable word sequence $S(w_1 w_2 \ldots w_{n_s})$ corresponding to *I*. One solution for this question is shown in equation (4):

$$\hat{S}\left(w_1 w_2 \cdots w_{n_{\hat{s}}}\right) = \arg\max_s \sum_{i_1 \in POS_{w_1}, i_2 \in POS_{w_2}, \cdots} P\left(S\left(w_1 o_{i_1} w_2 o_{i_2} \cdots w_{n_s} o_{i_{n_s}}\right) \mid I\right)$$

$$(4)$$

$POS_{w1}$ is the set of all the part-of-speech that $W_1$ has. $O_{i_n}$ is one of the part-of-speech of word $w_n$.

The question is to maximize $P(S)$. We can deduce to equation (5):

$$P(S) = P\left(O_{i_1}\right) \frac{P(w_1) P\left(O_{i_1} \mid w_1\right)}{P\left(O_{i_1}\right)} P\left(O_{i_2} \mid O_{i_1}\right) \frac{P(w_2) P\left(O_{i_2} \mid w_2\right)}{P\left(O_{i_2}\right)}$$

$$\cdots P\left(O_{i_{n_s}} \mid O_{i_{n_s-1}}\right) \frac{P(w_{n_s}) P\left(O_{i_{n_s}} \mid w_{n_s}\right)}{P\left(O_{i_{n_s}}\right)}$$

$$(5)$$

$P(O_{i_1})$ and $P(O_{i_2} \mid O_{i_1})$ are Part-of-Speech Uni-gram and Bi-gram respectively. They are contained in the Part-of-Speech Bi-gram Model (Part 22 in the dictionary shown by Fig. 2A). $P(w_l)$ is Word Uni-gram (Part 212 in the dictionary shown by Fig. 2A). $P(O_{i_1} \mid w_1)$ is the probability of a Part-of-Speech according to a word (Part 214 in the diagram of the dictionary).

At step 3646, the current word in the sentence prediction is determined. The current word candidates and the predictive current word candidates are deduced from the Patricia Tree node of this word. For example, suppose the sentence prediction is "阿 恶'", the current word is "恶". Then the Patricia tree node for the current word is node"3". So the current word candidate list only has one word "恶'", the predictive current word candidate list has no word.

Finally, the result to display is output at step 3647, and the process goes to the step 3641 to wait for another user input information.

If user input information is a user action, then step 3648 takes some corresponding adjustment on the results. For example, if the user chooses the second word from the current word candidate list, the current word of the sentence prediction should be changed to this new current word based on the chosen word. For example, if a user clicks "F2" (means OK) with respect to this sentence prediction result, then the sentence prediction 3321 as Fig. 11 shows is sent to a user application and the digital sequence 331 and all of the results in area 332 are reset.

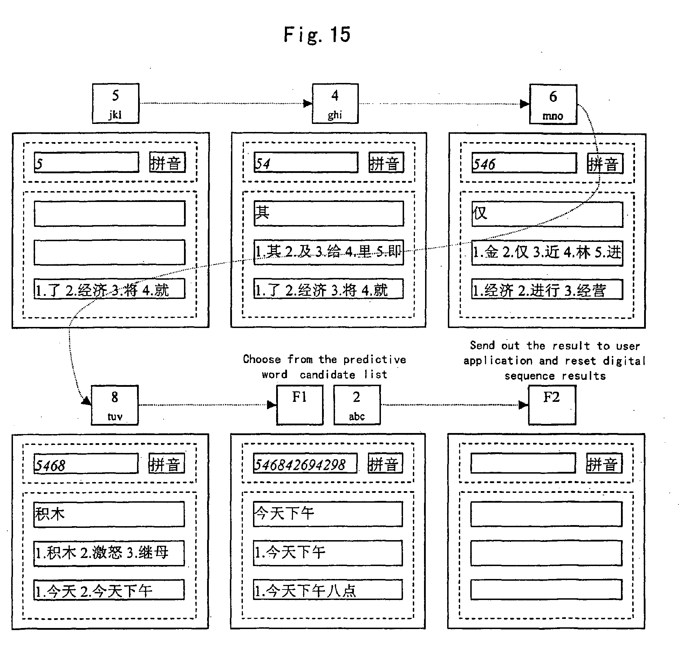

Fig. 15 shows an example of an input sequence of the user terminal device 3 which uses the keyboard shown in Fig 8A. In this figure, the user inputs Chinese "今天下午" using Pinyin with the first example of the user input terminal 32.

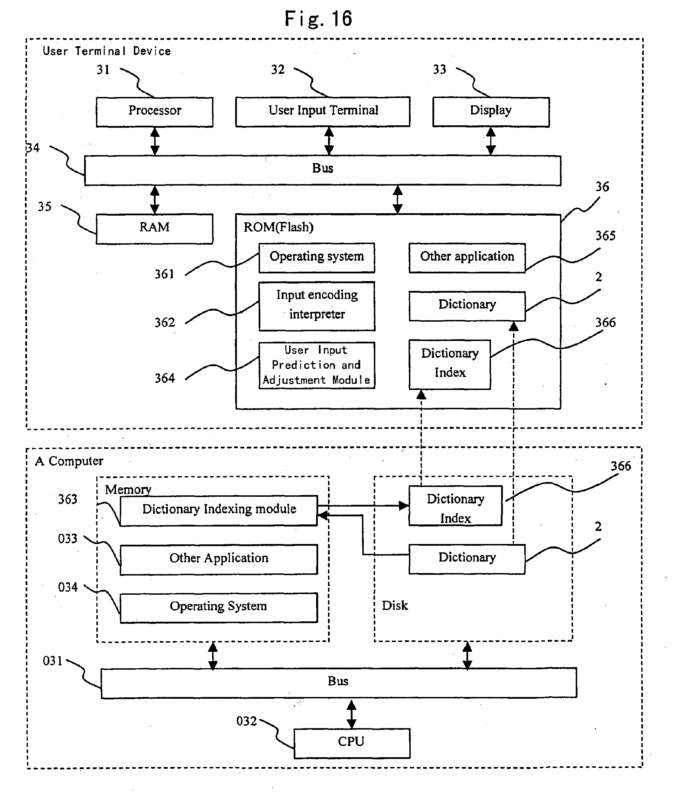

Fig. 16 shows a block diagram of a user terminal device according to the second embodiment of the present invention. This embodiment shows two parts: A mobile terminal and a computer. Whereas the first embodiment shown in Figure 7 comprises only one mobile terminal. The difference between these two embodiments is that this embodiment deploys the dictionary indexing module 363 in a computer. The dictionary indexing module 363 processes the dictionary 2 and outputs the dictionary index 366 in the disk of the computer. Then the dictionary 2 and the dictionary index 366 are transferred into the ROM (Flash) of the mobile terminal. The transferring process can be done by a tool which is provided by the mobile terminal provider. Then the user input prediction and adjustment module 364 can work like the first embodiment.

As can be seen from the foregoing, although exemplary embodiments have been described in detail, those skilled in the art will appreciate that various modifications, additions and substitutions are possible, without departing from the scope and spirit of the present invention as recited in the accompanying claims.

**Claims**

1. A dictionary learning method, comprising the steps of:

   learning a lexicon and a Statistical Language Model from an untagged corpus;
   integrating the lexicon, the Statistical Language Model and subsidiary word encoding information into a dictionary.

2. The dictionary learning method as claimed in claim 1, said method further comprising the steps of:

   obtaining Part-of-Speech information for each word in the lexicon and a Part-of-Speech Bi-gram Model from a Part-of-Speech tagged corpus; and
   adding the Part-of-Speech information and the Part-of-Speech Bi-gram Model into the dictionary.

3. The dictionary learning method as claimed in claim 1 or 2, wherein the subsidiary word encoding information comprises Chinese encoding information or non-Chinese encoding information.

4. The dictionary learning method as claimed in claim 3, wherein the Chinese encoding information comprises at least one of Pinyin encoding information and Stroke encoding information.

5. The dictionary learning method as claimed in claim 1, 2, 3, or 4, wherein:

   the step of learning a lexicon and Statistical Language Model from an untagged corpus comprises the steps of

   a) segmenting the untagged corpus into word sequence;
   b) creating a Statistical Language Model using the word sequence, wherein the Statistical Language Model comprises a Word Uni-gram Model and a Word Tri-gram model;
   c) computing perplexity and determining whether the perplexity is the first time to be computed or it decreases by a number more than a first threshold;
   d) re-segmenting the corpus into word sequence by Word Tri-gram Model and performing the step b) if the result of c) is positive;
   e) refining the lexicon based on the Statistical Language Model such that new words are added and unimportant words are removed if the result of c) is negative; and
   f) updating the word Uni-gram Model, deleting the word Tri-gram Model which is invalid and performing the step a) until the lexicon does not change any more.

6. The dictionary learning method as claimed in claim 5, wherein the step a) segments the untagged corpus according to the equation

$$\hat{S}\left\{w_1 w_2 \cdots w_{n_{\hat{S}}}\right\} = \arg\max_{S} P\left(S\left\{w_1 w_2 \cdots w_{n_s}\right\}\right),$$ wherein $S\{w_1 w_2 \ldots w_{n_s}\}$ denotes a word sequence $w_1 w_2 \ldots w_{n_s}$, $P(S\{w_1 w_2 \ldots w_{n_s}\})$ denotes the probability of this word sequence's likelihood. The optimized word sequence will be $\hat{S}\left\{w_1 w_2 \cdots w_{n_{\hat{S}}}\right\}$.

**7.** The dictionary learning method as claimed in claim 5, wherein
the step a) comprises segmenting the corpus by using maximal matching based on the lexicon.

**8.** The method as claimed in claim 5, 6 or 7, wherein
the step d) comprises re-segmenting the corpus by using maximal matching based on the lexicon.

**9.** The method as claimed in claim 5, 6, 7 or 8, wherein
the step e) comprises the steps of

> e1) filtering all Tri-gram entries and Bi-gram entries by a first occurrence count threshold so as to form a new word candidate list;
> e2) filtering all candidates from the new word candidate list by a mutual information threshold as first candidates;
> e3) calculating Relative Entropy for all first candidates in the new word candidate list and sorting them in Relative Entropy descending order;
> e4) filtering all words in the Lexicon by a second occurrence count threshold so as to form a deleted word candidate list;
> e5) segmenting each word in the deleted word candidate list into a sequence of other words in Lexicon as second candidates;
> e6) calculating Relative Entropy for all of the second candidates in the deleted word candidate list and sorting them in Relative Entropy ascending order;
> e7) determining the number of the first candidates should be added and the number of the second candidates should be removed and updating the Lexicon.

**10.** The dictionary learning method as claimed in claim 9, wherein
the step e2) comprises calculating the mutual information of all candidates according to the equation:

$$\mathrm{MI}(w_1, w_2 \cdots w_n) = \frac{f(w_1, w_2 \cdots w_n)}{\sum_{i=1}^{n} f(w_i) - f(w_1, w_2 \cdots w_n)}$$

where $(w_1, w_2 \ldots w_n)$ is a word sequence and $f(w_1, w_2 \ldots w_n)$ denotes an occurrence frequency of the word sequence $(w_1, w_2 \ldots w_n)$, and n equals to 2 or 3.

**11.** A dictionary learning device, comprising:

> a dictionary learning processing module which learns a dictionary;
> a memory unit which stores an untagged corpus;
> a controlling unit which controls each part of the device;
> wherein the dictionary learning processing module comprises
> a lexicon and Statistical Language Model learning unit which learns a lexicon and a Statistical Language Model from the untagged corpus; and
> a dictionary integrating unit which integrates the lexicon, the Statistical Language Model and subsidiary word encoding information into a dictionary.

**12.** The dictionary learning device as claimed in claim 11, wherein the memory unit further stores a Part-of-Speech tagged corpus, and

the dictionary learning processing module further comprises:

a Part-of-Speech learning unit which obtains Part-of-Speech information for each word in the lexicon and a Part-of-Speech Bi-gram Model from the Part-of-Speech tagged corpus; and

the dictionary integrating unit adding the Part-of-Speech information and Part-of-Speech Bi-gram Model into the dictionary.

13. The dictionary learning device as claimed in claim 11 or 12, wherein the lexicon and Statistical Language Model learning unit learns a lexicon and a Statistical Language Model from the untagged corpus by

segmenting the untagged corpus into word sequence;

creating the Statistical Language Model using the word sequence, wherein the Statistical Language Model comprises a Word Uni-gram Model and a Word-Tri-gram model;

repeating to re-segment the corpus into word sequence by Word Tri-gram Model and creating the Statistical Language Model using the word sequence, until the perplexity is not the first time to be computed and is decreases by a number smaller than a first threshold;

refining the lexicon based on the Statistical Language Model such that new words are added and unimportant words are removed; and

updating the word Uni-gram Model, deleting the invalid word Tri-gram Model and repeating to segment the untagged corpus into word sequence until the lexicon does not change any more.

14. The dictionary learning device as claimed in claim 13, wherein the lexicon and Statistical Language Model learning unit refines the lexicon by

filtering all Tri-gram entries and Bi-gram entries by a first occurrence count threshold so as to form a new word candidate list;

filtering all candidates from the new word candidate list by a mutual information threshold as first candidates;

calculating Relative Entropy for all the first candidates in the new word candidate list and sorting them in Relative Entropy descending order;

filtering all words in the lexicon by a second occurrence count threshold so as to form a deleted word candidate list;

segmenting each word in the deleted word candidate list into a sequence of other words in the lexicon as second candidates;

calculating Relative Entropy for all the second candidates in the deleted word candidate list and sorting them in Relative Entropy ascending order;

determining the number of the first candidates should be added and the number of the second candidates should be removed and updating the Lexicon.

15. The device as claimed in claim 11, 12, 13 or 14, wherein

the subsidiary word encoding information comprises Chinese encoding information or non-Chinese encoding information.

16. The dictionary learning device as claimed in claim 15, wherein the Chinese encoding information comprises at least one of Pinyin encoding information and Stroke encoding information.

17. An input method for processing a user input, wherein the method comprises:

a receiving step for receiving a user input;

an interpreting step for interpreting the user input into encoding information or a user action, wherein the encoding information for each word in a dictionary is obtained in advance on the basis of the dictionary;

a user input prediction and adjustment step for giving sentence and word prediction using Patricia Tree index in a dictionary index based on a Statistical Language Model and a Part-of-Speech Bi-gram Model in the dictionary and adjusting the sentence and word prediction according to the user action, when the encoding information or the user action is received;

a displaying step for displaying the result of sentence and word prediction.

18. The input method for processing a user input as claimed in claim 17, wherein the receiving step receives Chinese input or non-Chinese input.

19. The input method for processing a user input as claimed in claim 18, wherein the Chinese input includes one of Pinyin input, Stroke input and pen trace input.

**20.** The method as claimed in claim 17, 18 or 19
wherein the user input prediction and adjustment step comprises the steps of

a) receiving the interpreted encoding information or a user action;
b) modifying the predicted result if it is the user action and performing the step h);
c) searching for all possible new Patricia Tree nodes of the Patricia Tree index from all current Patricia Tree nodes according to the encoding information;
d) ignoring this encoding information and restoring all searching results and status and performing step a) if there are no any new Patricia Tree nodes;
e) setting new Patricia Tree nodes as current Patricia Tree nodes if there are any new Patricia Tree nodes;
f) searching for all possible words from the current Patricia Tree nodes and giving sentence prediction;
g) determining a current word from the result of the sentence prediction, and giving word prediction, wherein the word prediction comprises a word candidate list and a predictive word candidate list; and
h) outputting the predicted result to display and returning to perform the step a).

**21.** The input method for processing a user input as claimed in claim 20, wherein the step f) gives the sentence prediction by determining the most probable word sequence as a predicted sentence according to the following equation:

$$\hat{S}\left(w_1 w_2 \cdots w_{n_{\hat{S}}}\right) = \arg\max_{s} \sum_{i_1 \in POS_{w_1}, i_2 \in POS_{w_2} \cdots} P\left(S\left(w_1 o_{i_1} w_2 o_{i_2} \cdots w_{n_s} o_{i_{n_s}}\right) \mid I\right),$$

$$P(S) = P\left(O_{i_1}\right) \frac{P(w_1)P\left(O_{i_1} \mid w_1\right)}{P\left(O_{i_1}\right)} P\left(O_{i_2} \mid O_{i_1}\right) \frac{P(w_2)P\left(O_{i_2} \mid w_2\right)}{P\left(O_{i_2}\right)}$$

$$\cdots P\left(O_{i_{n_s}} \mid O_{i_{n_s-1}}\right) \frac{P(w_{n_s})P\left(O_{i_{n_s}} \mid w_{n_s}\right)}{P\left(O_{i_{n_s}}\right)},$$

where
$POS_{w1}$ is a set of all Part-of-Speech that word $W_1$ has;
$O_{i_n}$ is one of the Part-of-Speech of word $w_n$;
$P(O_{i_1})$ and $P(O_{i_2} \mid O_{i_1})$ are Part-of-Speech Uni-gram and Part-of-Speech Bi-gram respectively;
$P(w_1)$ is Word Uni-gram; and
$P(O_{i_1} \mid w_1)$ is the probability of a Part-of-Speech corresponding to a word.

**22.** A user terminal device for processing a user input, wherein the device comprises:

a user input terminal which receives a user input;
a memory unit which stores a dictionary and a dictionary index comprising a Patricia Tree index;
an input processing unit which gives sentence and word prediction based on the user input; and
a display which displays the result of sentence and word prediction;
wherein the input processing unit comprises
an input encoding interpreter which interprets the user input into encoding information or a user action, wherein the encoding information for each word in the dictionary is obtained in advance on the basis of the dictionary;
a user input prediction and adjustment module which gives sentence and word prediction using Patricia Tree index in a dictionary index based on Statistical Language Model and Part-of-Speech Bi-gram Model in the dictionary and adjusts the sentence and word prediction according to the user action, when the encoding information or the user action is received.

**23.** The user terminal device for processing a user input as claimed in claim 22, wherein the input processing unit further comprises a dictionary indexing module which gives encoding information for each word entry of the dictionary, sorts all word entries by encoding information and Word Uni-gram, builds Patricia Tree index and adds it to the dictionary index.

**24.** The user terminal device for processing a user input as claimed in claim 22 or 23, wherein the user input prediction and adjustment module gives sentence and word prediction and adjusts the prediction by

receiving the interpreted encoding information or a user action;

modifying the predicted result if the received information is the user action and output the result to display;

searching for all possible new Patricia Tree nodes of the Patricia Tree index from all current Patricia Tree nodes if the received information is the encoding information;

ignoring this encoding information and restoring all searching results and status if there are no any new Patricia Tree nodes, then repeating to receive the interpreted encoding information or a user action;

setting new Patricia Tree nodes as current Patricia Tree nodes if there are any new Patricia Tree nodes;

searching for all possible words from the current Patricia Tree nodes and giving sentence prediction;

determining a current word from the result of the sentence prediction, and giving word prediction, wherein the word prediction comprises a word candidate list and a predictive word candidate list; and

outputting the predicted result to display.

**25.** The device as claimed in claim 22, 23 or 24, wherein the user input terminal is used for Chinese input or non-Chinese input.

**26.** The device as claimed in any one of claims 22 to 25, wherein the user input terminal can be a digital key board in which each digital button stands for several pinyin codes or several stroke codes.

**27.** The user terminal device for processing a user input as claimed in claim 25 or 26, wherein the user input terminal is a touch pad.

# Fig. 1

```
   1                        2                      3
┌──────────────┐    ┌──────────────┐    ┌──────────────┐
│ Dictionary   │    │              │    │    User      │
│ Learning     │───▶│  Dictionary  │───▶│  Terminal    │
│ Device       │    │              │    │   Device     │
└──────────────┘    └──────────────┘    └──────────────┘
```

# Fig. 2A

| Word Entry 1 | Word Lemma, e.g."打扮" | | — 211 |
|---|---|---|---|
| | Word Unigram (Word Occurrence Probability), e.g. 0.00001492 | | — 212 |
| | Part-of-Speech 1, e.g. noun | Corresponding probability , e.g. 0.20 | — 214 |
| | Part-of-Speech 2, e.g. verb | Corresponding probability , e.g. 0.80 | — 213 |
| | ... | ... | |
| | Subsidiary Word Encoding Information 1, e.g. Pinyin Encoding Information "daban" | | — 215 |
| | Subsidiary Word Encoding Information 2, e.g. Stroke Encoding Information, e.g. "—∠————∠—/" | | |
| | ... | | |
| Word Entry 2 | | | |
| ...... | | | |
| Word Entry n | | | |
| Part-of-Speech Bi-gram Model | | | — 22 |

21

# Fig. 2B

| Word<br>Entry 1 | Word Lemma, e.g. "打扮" | 211 |
| | Word Unigram (Word Occurrence Probability), e.g. 0.00001492 | 212 |
| | Subsidiary Word Encoding Information 1,<br>e.g. Pinyin Encoding Information "daban" | |
| | Subsidiary Word Encoding Information 2,<br>e.g. Stroke Encoding Information, e.g. "—∠———∠—／" | |
| | ... | 215 |
| Word Entry 2 | | |
| ...... | | |
| Word Entry n | | |

21

## Fig. 3

Dictionary Learning Device

101 CPU

102 Accessories

1

103 Bus

104 Memory

1041 Operating System

1042 Dictionary Learning Processing Module

1043 Other Applications

105 Hard Disk

1051 Corpus

1052 Dictionary Learning files

2 Dictionary

# Fig. 4A

# Fig. 4B

# Fig. 5

Start

151 — Segment a corpus into word sequences

152 — Create a Statistical Language Model using the word sequences

154 — Re-segment the corpus into word sequences by word Tri-gram Model

153 — Compute perplexity and determine whether the new perplexity decreases more than a threshold or it is the first time to be computed?

Y

155 — Refine the lexicon based on some information of the Statistical Language Model

157 — Update the Word Uni-gram Model and delete the invalid Word Tri-gram Model

N

156 — Lexicon changes any more ?

Y

N

End

# Fig. 6

```
                         ┌─────────┐
                         │  Start  │
                         └─────────┘
```

1551

Filter all the Tri-gram enties and Bi-gram entries to a new word candidate list by occurrence count

1552

Filter all candidates in the new word candidate list again by mutual information

1553

Calculate the Relative Entropy for all candidates in the new word candidate list and sort them in Relative Entropy descending order

1554

Filter all words in the Lexicon to a deleted word candidate list by occurrence count

1555

Segment each word in the deleted word candidate list into a sequence of other words in the Lexicon

1556

Calculate the Relative Entropy for all candidates in the deleted word candidate list and sort them in Relative Entropy ascending order

1557

Determine how many candidates should be added and how many candidates should be removed, and update the lexicon

```
                         ┌─────────┐
                         │   End   │
                         └─────────┘
```

Fig. 7

## Fig. 8A

## Fig. 8B

## Fig. 8C

| | | |
|---|---|---|
| 322 → F1 | | F2 |
| 1 あ | 2 か | 3 さ |
| 321 → 4 た | 5 な | 6 は |
| 7 ま | 8 や | 9 ら |
| * | 0 わをん | # 〞• |

## Fig. 8D

| | | |
|---|---|---|
| 322 → F1 | | F2 |
| 1 ｜ | 2 ・ | 3 ― |
| 321 → 4 ㄱㅋㄲ | 5 ㄴㄹ | 6 ㄷㅌㄸ |
| 7 ㅂㅍㅃ | 8 ㅅㅎㅆ | 9 ㅈㅊㅉ |
| * | 0 ㅇㅁ | # |

# Fig. 9A

Most Traditional Input Method

| 5 jkl | 4 ghi | 6 mno |
|---|---|---|

1 click   3 clicks  2 clicks   =6 clicks

T9 Input Method

| 5 jkl | 4 ghi | 6 mno |
|---|---|---|

1 click   1 click   1 click   =3 clicks

jin lin jio

进今金...

> OK

1 click   1 click

今

# Fig. 9B

| 5 jkl | 4 ghi | 6 mno |
|---|---|---|

1 click   1 click   1 click

jin lin jio

进今金...

> OK

1 click   1 click

今

天日年...

OK

1 click

今天

# Fig. 10

32 — User Input Terminal

33 — Display

34 — Bus

2 — Dictionary

362 — Input Encoding Interpreter

363 — Dictionary Indexing Module

366 — Dictionary Index

364 — User Input Prediction and Adjustment Module

# Fig. 11

33

3312

5468426942982234262*4832*    拼音

3311

331

332

今天下午出发

3321

1.出发  2.处罚  3.处罚  4.触发

3322

1.出发点  2.厨房  3.出访

3323

# Fig. 12

```
        ┌─────────────────┐
        │      Start       │
        └─────────────────┘
                 │
                 ▼
┌──────────────────────────────────┐
│  Read Dictionary and give encoding │
3631 │   information for each word entry  │
└──────────────────────────────────┘
                 │
                 ▼
┌──────────────────────────────────┐
│      Sort all word entries by     │
3632 │  encoding information and Word    │
│  Uni-gram and build Patricia      │
│  Tree Index and write it into     │
│      a dictionary index           │
└──────────────────────────────────┘
                 │
                 ▼
        ┌─────────────────┐
        │       End        │
        └─────────────────┘
```

# Fig. 13

Sorting Result

| Word Index | Word Lemma | Encoding Information (According to the first example of User Input Terminal) | Word Uni-gram |
|---|---|---|---|
| 1 | 阿 | "2" | 4.08e-4 |
| 2 | 啊 | "2" | 1.18e-4 |
| 3 | 测 | "23" | 1.60e-4 |
| 4 | 笨 | "236" | 1.22e-5 |
| 5 | 层 | "2364" | 5.38e-4 |
| 6 | 测试 | "23744" | 2.45e-4 |
| 7 | 侧翼 | "2394" | 8.95e-6 |
| 8 | 恶 | "3" | 7.41e-5 |

Example Node

| Last Digit for This Node | Start Word Index | End Word Index | Start Index for Next Node | End Index for Next Node |
|---|---|---|---|---|
| "2" | 1 (阿) | 2 (啊) | 1 ("23") | 1 ("23") |

Patricia Tree Index

| Last Digit for This Node | Start Word Index | End Word Index | Start Index for Next Node | End Index for Next Node |
|---|---|---|---|---|
| "3" | 3 (测) | 3 (测) | 1 ("236") | 3 ("239") |

# Fig. 14

```
                    ┌─────────────┐
                    │    Start    │
                    └─────────────┘
                           │
                           ▼
  3641                ╱─────────────╲
  User action   ◄────  Receive a user input,
                 │     determine whether it is a user
                 │     action or encoding information?
                 │        ╲─────────────╱
                 │              │
                 │              │ Encoding information
                 │              ▼
  3648           │    3642  ┌──────────────────────┐
 ┌──────────────┐│         │ Receive this user input│
 │Modify         ││        │ encoding information, and│      3644
 │corresponding  ││        │ search for all possible new│   ┌──────────────────┐
 │result         ││        │ Patricia Tree nodes from all│   │Ignore this encoding│
 └──────────────┘│        │ current Patricia Tree nodes │   │information and restore│
                 │         │ according to this encoding  │   │all results and status │
                 │         │ information                 │   └──────────────────┘
                 │         └──────────────────────┘                  ▲
                 │    3643      │                                    │
                 │          ╱───────────╲         N                  │
                 │         │ Are there any new nodes? ├──────────────┘
                 │          ╲───────────╱
                 │              │ Y
                 │              ▼
                 │    3645  ┌──────────────────────┐
                 │         │ Set new Patricia Tree nodes as│
                 │         │ current Patricia Tree nodes and│
                 │         │ search for possible words from │
                 │         │ these nodes and give sentence  │
                 │         │ prediction                     │
                 │         └──────────────────────┘
                 │              │
                 │              ▼
                 │    3646  ┌──────────────────────┐
                 │         │ Determine current word from the│
                 │         │ sentence prediction result, and give│
                 │         │ word candidate list and predictive │
                 │         │ word candidate list             │
                 │         └──────────────────────┘
                 │              │
                 └──────────────┤
                      3647      ▼
                          ┌──────────────────────┐
                          │ Output the result to display│
                          └──────────────────────┘
                                 │
                                 ▼
```

# Fig. 15

| 5 jkl | → | 4 ghi | → | 6 mno |
|---|---|---|---|---|

| 5 | 拼音 |
|---|---|
| | |
| | |
| 1.了 2.经济 3.将 4.就 | |

| 54 | 拼音 |
|---|---|
| 其 | |
| 1.其 2.及 3.给 4.里 5.即 | |
| 1.了 2.经济 3.将 4.就 | |

| 546 | 拼音 |
|---|---|
| 仅 | |
| 1.金 2.仅 3.近 4.林 5.进 | |
| 1.经济 2.进行 3.经营 | |

Choose from the predictive word candidate list

Send out the result to user application and reset digital sequence results

| 8 tuv | → | F1 | 2 abc | → | F2 |
|---|---|---|---|---|---|

| 5468 | 拼音 |
|---|---|
| 积木 | |
| 1.积木 2.激怒 3.继母 | |
| 1.今天 2.今天下午 | |

| 546842694298 | 拼音 |
|---|---|
| 今天下午 | |
| 1.今天下午 | |
| 1.今天下午八点 | |

| | 拼音 |
|---|---|
| | |
| | |
| | |

# Fig. 16

**User Terminal Device**

31 — Processor
32 — User Input Terminal
33 — Display

34 — Bus

35 — RAM

36 — ROM(Flash)

361 — Operating system
362 — Input encoding interpreter
364 — User Input Prediction and Adjustment Module

365 — Other application
2 — Dictionary
366 — Dictionary Index

**A Computer**

Memory
363 — Dictionary Indexing module
033 — Other Application
034 — Operating System

Disk
366 — Dictionary Index
2 — Dictionary

031 — Bus

032 — CPU